(19) Europäisches Patentamt

European Patent Office

Office européen des brevets

(11) Publication number: **0 324 922 B1**

## EUROPEAN PATENT SPECIFICATION

(45) Date of publication of patent specification: **12.08.92**

(51) Int. Cl.⁵: **B01D 63/08, //A61M1/22**

(21) Application number: **88119648.9**

(22) Date of filing: **25.11.88**

(54) **An arrangement for the diffusion of substances between two fluids.**

(30) Priority: **18.01.88 SE 8800138**

(43) Date of publication of application:
**26.07.89 Bulletin 89/30**

(45) Publication of the grant of the patent:
**12.08.92 Bulletin 92/33**

(84) Designated Contracting States:
**BE CH DE ES FR GB IT LI NL**

(56) References cited:
**EP-A- 0 003 495     DE-A- 2 417 013**
**FR-A- 2 206 110     FR-A- 2 243 715**
**US-A- 3 534 860     US-A- 4 051 041**

(73) Proprietor: **Gambro AG**
**P.O. Box 83**
**CH-6331 Hünenberg(CH)**

(72) Inventor: **Flank, Hans Peder**
**Kommendörsgatan 7c**
**S-211 50 Malmö(SE)**
Inventor: **Nilsson, Nils-Joel Eddie**
**Trastvägen 6**
**S-280 10 Sösdala(SE)**
Inventor: **Riede, Gerhard**
**Möllevangsgatan 7**
**S-235 00 Vellinge(SE)**

(74) Representative: **Boberg, Nils Gunnar Erik et al**
**Gambro AB Patent Department Box 10101**
**S-220 10 Lund(SE)**

Rank Xerox (UK) Business Services

## Description

The present invention relates to an arrangement for the diffusion and/or filtration of substances between two fluids via semipermeable membranes which are arranged in a stack separated by supporting plates having a first plane face and a second plane face and comprising through-openings connected to an inlet and oulet respectively for a first fluid, by means of which this first fluid is conducted to the one side of the respective membrane, whilst a second fluid is conducted to the other side of the membrane, the stack of membranes and supporting plates having an elongated shape with a flow-through duct formed by the said through-openings arranged straight through the stack near each of its two ends.

The membrane in arrangements of the above mentioned type may be arranged singly between adjacently placed supporting plates. Preferably, though, they are arranged in pairs.

The present invention can be said to constitute a further step in series of developments described in more detail in the American patents 3 411 630, 3 501 011, 3 511 381, 3 516 548, 3 734 298, 3 837 496, 4 051 041, 4 062 778, 4 224 159, 4 390 424, 4 113 625, 4 422 936 and 4 447 326.

The devices in accordance with the above mentioned patents have been improved more and more especially regarding the sealing between the respective fluids, in particular at the inlets and outlets for the same, at the same time as the number of components included has been reduced in parallel with a simplification of the remaining parts.

The present invention relates to a further simplification and improvement of arrangements of the aforementioned type. An arrangement improved in accordance with the invention is characterized principally by channels originating from end edges of the supporting plates open towards a first plane face for the conducting of the said second fluid past a seal arranged on the opposite plane face to an opening passing through the plate for the conducting of this second fluid to, respectively from, the space inside the said seal on the said opposite plane face of the plate.

The invention is intended in particular to be applied to dialysis and/or filtration of blood and will be described, therefore, in the following primarily in connection with such an application. The said first fluid then is constituted of the blood, whereas the second fluid may be constituted of dialysis liquid or filtrate.

Designs which are particularly simple and gentle to the blood are achieved, if the membranes are arranged in pairs between respective supporting plates. The blood then can be conducted between the membranes in such a manner that it does not come into contact with the actual supporting plates which, therefore, can be manufactured from a simpler material than if they were to be wholly flooded by the blood.

When membranes arranged in pairs are used, open channels are arranged on the said opposite plane face originating from the said through-openings for the conducting of the second fluid further past a seal provided on the first plane face up to an opening passing through the second plate for the distribution of the second fluid to the two opposite plane faces of the plate.

The through-openings for the first fluid are provided preferably on the centre line of the plate near its end edges. If the channels originating from end edges of the plates are arranged in two groups on either side of the through-openings for the first fluid and are made to extend substantially up to these, and preferably partly past them, the quantity of residual blood is reduced on emptying of the arrangement when used as a dialyser.

The quantity of residual blood is also favourably affected, if the said seals are made to include an essentially V-or U-shaped part extending transversely over the respective plane face which surrounds the respective through-opening for the first fluid, that is to say the blood when a dialyzer is concerned.

A particularly simple and, from a point of view of sealing, reliable arrangement is obtained, if the said stack is arranged fixed in a boxlike enclosure with inlet ducts provided for the said second fluid between the enclosure and the end walls of the stack. On application to a dialyser this second fluid thus consists of dialysis liquid.

The enclosure may be composed of two boxlike parts, each being provided with a flange projecting along the orifice edge, which are held together through being cast into a retaining band. This retaining band and thus is cast in situ after the remainder of the arrangement has been assembled.

At the same time inlet nipples for the said second fluid, that is to say the dialysis liquid when a dialyser is concerned, may be cast in one piece with the retaining band. This too has a favourable effect on the sealing.

The above mentioned seals are arranged appropriately so that they co-operate in pairs at different distances from the two end edges. The seals in the respective pairs preferably are designed as a sealing bead which co-operates with a plain sealing surface. It will be obvious to those versed in the art, however, that other types of seals may also be used. For example, two plain sealing surfaces may co-operate.

Fig 1 shows a cross-section through an arrangement in accordance with the invention.

Fig 2 and 3 show opposite ends of one and the same side of a supporting plate in accordance with the invention. The opposite side is of the same design but with the ends reversed.

Fig 4 and 5 show sections along the lines IV-IV and V-V in the figures 2 and 3, respectively.

Fig 6, finally, shows on a larger scale a partial view of the top side of a plate near one of its ends.

The embodiment of the arrangement in accordance with the invention shown on the drawings by way of an example consists of a stack of supporting plates 1 with membranes 2 arranged in pairs between the plates. The stack is fixed in an enclosure 3 which consists of two enclosure parts 3a and 3b. A flange 4a and 4b, respectively, runs along the orifices of the boxlike enclosure parts which are partially cast into a retaining band 5. Nipples 6, which lead to a distributing or collecting channel 24 for the said second fluid, are preferably cast in one piece with this retaining band 5. When a dialyser is concerned, these nipples 6 serve as inlet and outlet, respectively, for the dialysis liquid. If instead a haemofilter is concerned, it would be enough with one nipple 6 intended to serve as an outlet for the filtrate.

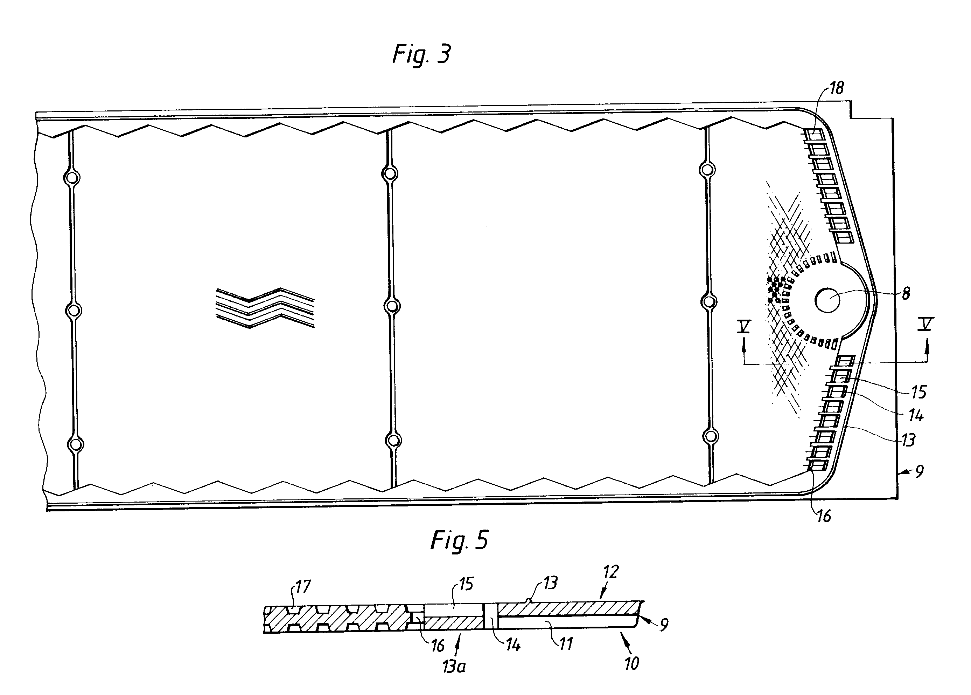

When the supporting plate shown in figures 2-5 is used in a dialyser, the blood is supplied in a manner known in itself to a flow-through duct formed by through-openings 7 arranged straight through the stack near its one end. At the same time the blood is withdrawn in a manner known in itself through a flow-through duct formed by through-openings 8 arranged straight through the stack near its other end. On membranes arranged in pairs this supply and withdrawal, respectively, takes place with the help of blood distributing buttons of the type described in more detail in the above mentioned American patents 3 837 496 and 3 841 491.

The dialysis liquid is furnished instead, as can best be seen in figures 3 and 5, through channels 11 originating from the end edges 9 of the supporting plates and open towards the undersides 10 of the plates. At that a seal 13, provided on the other side 12 of the plate, is passed. The dialysis liquid subsequently passes through an opening 14 leading through the plate so as to flow out into channels 15 open towards the top side of the plates. Finally, the dialysis liquid is distributed to both sides of the plates through a second set of through-openings 16. Finally, the dialysis liquid is conducted out in channels 17 distributed over the whole working surface of the plate. The dialysis liquid then leaves the plate via a system of channels which are shown best in figure 4. They are similar to the channel system according to figure 5 and have been given, therefore, the same reference designations, but with the addition of a prime sign. The dialysis liquid this flows first through an opening 16' passing through the plate into a channel 15' on the underside 10 of the plate. From there the dialysis liquid flows through a further opening 14' passing through the plate out into a channel 11' which lastly opens out at the opposite end edge 9' of the plate. The difference compared at the arrangement according to figure 5 lies primarily in the seal 13' which here is retracted to a location straight before the channel 15'. In this manner the seals 13 and 13' can constitute two parts of a seal which extends around the whole working surface of the plate including inlet and outlet openings for the blood. This seal, thus being in the form of a sealing bead, co-operates with a plain sealing surface provided on the opposite side of the plate, the corresponding sealing components being designated 13a and 13a'. Numerals 18 and 18', respectively, designate a ridge shown schematically as a line provided in the channels 15 and 11', respectively. This narrow ridge, which appropriately extends up to the surface of the plate, is intended to prevent the membrane being pressed down into these channels. As is evident, these ridges after an interruption for the openings 16 and 16', extend a short distance inward on the supporting plate up to the actual working pattern of the plate.

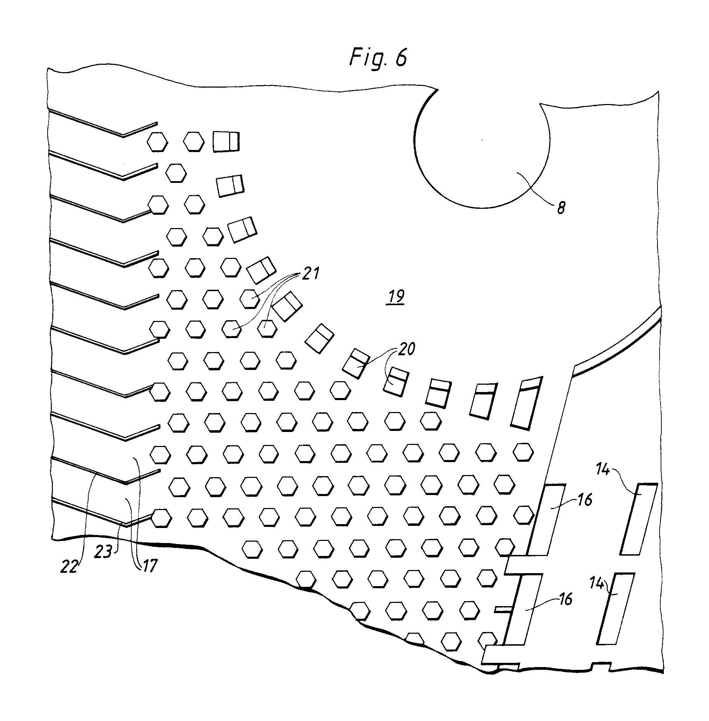

In figure 6 is shown the region adjoining the blood inlet 8 on a larger scale. This blood inlet 8 is arranged in the centre of a conical recess 19 which is surrounded by a circular row of bevelled studs 20. Between the studs 20 and the working channels 17 is provided a great number of hexagonal studs 21. To the right in the figure some through-openings 14 and 16 are shown.

As can bee seen, the working channels 17 are surrounded by alternately wide and narrow ridges 22 and 23, respectively. These are designed appropriately of the same height as the studs 20 and 21.

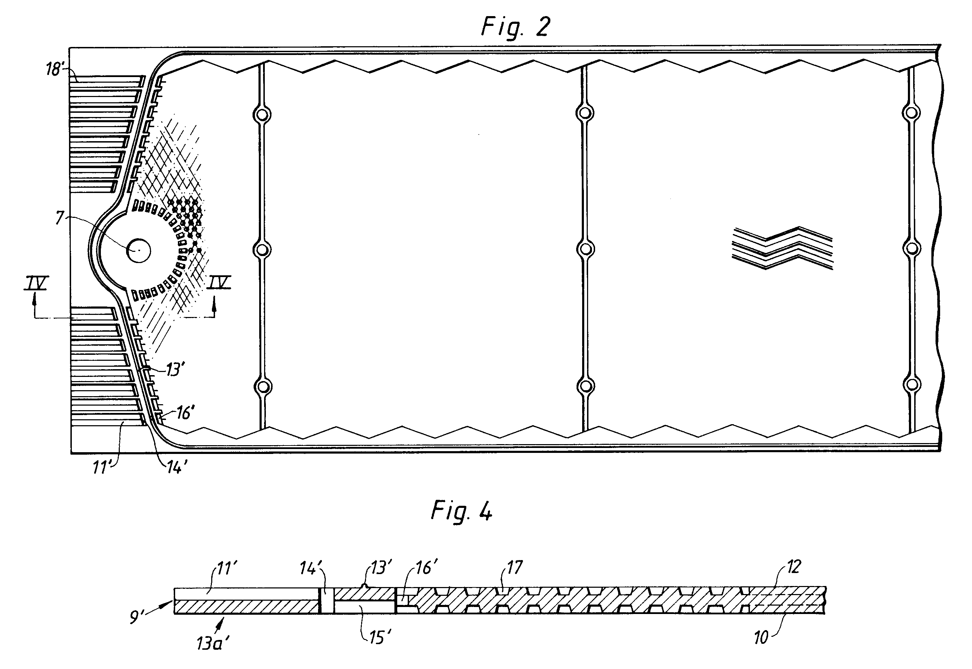

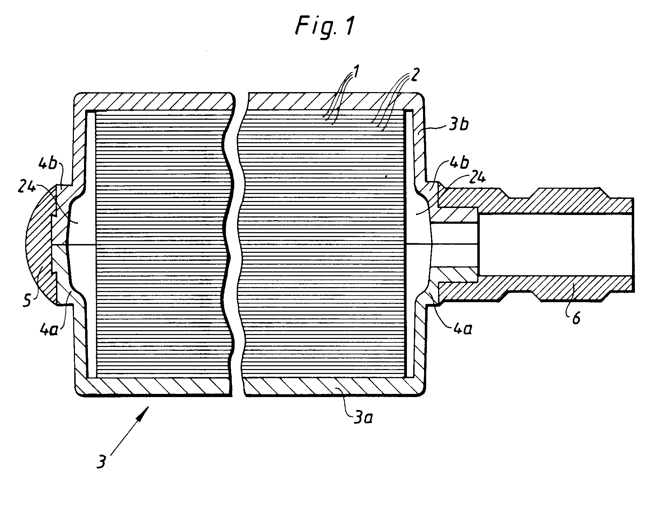

During the assembly of the device shown in fig 1 every other supporting plate is turned by 180° in its own main plane, that is to say so that the beads 13 and 13' always point either upwards or downwards. If the beads instead were to be exchanged for plain sealing surfaces, the plates can be turned instead by 180° either round the longitudinal centre axis or the transverse centre axis in order to achieve the same result.

**Claims**

1. An arrangement for the diffusion and/or filtration of substances between two fluids via semipermeable membranes (2) which are arranged in a stack separated by supporting plates (1) having a first plane face and a second plane face (10,12) and comprising through-openings (7,8) connected to an inlet and outlet, respectively, for a first fluid, by means of which this first fluid is conducted to the one side of the respective membrane, whilst a second fluid is conducted to the other side of the membrane, the stack of membranes and supporting plates having an elongated shape with a flow-through duct formed of the said through-openings (7,8) arranged straight through the stack near each of its two ends, **characterized** by channels (11,11') originating from end edges (9,9') of the supporting plates, open towards a first plane face (10,12), for the conducting of the said second fluid past a seal (13,13a') arranged on the opposite plane face (12,10) to an opening (14,14') passing through the plate for the conducting of the said second fluid to, respectively from, the space inside the said seal (13,13a') on the said opposite plane face (12,10) of the plate.

2. An arrangement in accordance with claim 1, **characterized** in that the membranes (2) are arranged in pairs between respective supporting plates (1).

3. An arrangement in accordance with claim 1, **characterized** by open channels (15,15') arranged on the said opposite plane face (12,10) originating from the said through-openings (14,14') for the conducting of the second fluid further past a seal (13a,13') provided on the first plane face (10,12) up to an opening (16,16') passing through the second plate for the distribution of this second fluid to the two opposite plane faces (10,12) of the plate.

4. An arrangement in accordance with anyone of the preceding claims, **characterized** in that the through-openings (7,8) for the first fluid are provided on the centre line of the plate, near its end edges (9,9').

5. An arrangement in accordance with claim 4, **characterized** in that the channels (11,11') originating from the end edges (9,9') of the plates are arranged in two groups on either side of the through-openings (7,8) for the first fluid and extend substantially up to these and preferably partly past them.

6. An arrangement in accordance with claim 3, **characterized** in that the said seals (13,13';13a,13a') comprise an essentially V- or U-shaped part extending transversely over the respective plane face, which surrounds the respective through-opening (7,8) for the first fluid.

7. An arrangement in accordance with anyone of the preceding claims, **characterized** in that the said stack is arranged fixed in a boxlike enclosure (3) with inlet ducts (24) provided for the said second fluid between the enclosure and the end walls of the stack.

8. An arrangement in accordance with claim 7, **characterized** in that the enclosure is composed of two boxlike parts (3a,3b), each provided with a flange (4a,4b) projecting along the orifice edge, which are held together through being cast into a retaining band (5).

9. An arrangement in accordance with claim 8, **characterized** by inlet nipples (6) for the said second fluid being cast in one piece with the retaining band (5).

10. An arrangement in accordance with claim 3, **characterized** in that the said seals (13,13'; 13a,13a') are arranged so that they co-operate in pairs at different distances reckoned from the two end edges (9,9') of the plate.

11. An arrangement in accordance with claim 10, **characterized** in that the said seals in the respective pairs consist of a sealing bead (13,13') co-operating with a plain sealing surface (13a,13a').

**Revendications**

1. Dispositif pour la diffusion et/ou la filtration de substances entre deux fluides par l'intermédiaire de membranes semi-perméables (2) qui sont empilées avec interposition de plaques d'appui (1) présentant une première face plane et une deuxième face plane (10,12) et comportant des orifices traversants (7,8) connectés à une entrée et une sortie, respectivement, pour un premier fluide, au moyen desquels ce premier fluide est amené au premier côté de la membrane respective tandis qu'un deuxième fluide est amené à l'autre côté de la membrane, la pile de membranes et de plaques d'appui ayant une forme allongée avec un conduit d'écoulement traversant défini par lesdits orifices traversants (7,8) alignés à travers la pile près de chacune de ces deux extrémités, caractérisé par des canaux (11,11') partant des bords d'extrémité (9,9') des plaques d'appui et ouverts vers une première face plane (10,12), pour conduire ledit deuxième fluide au-delà d'une étanchéité (13,13a') prévue sur la face plane opposée (12,10), jusqu'à un trou (14,14') traversant la plaque pour amener ledit deuxième fluide à l'espace, et respectivement à partir de celui-ci, situé à l'intérieur de ladite étanchéité (13,13a') sur ladite face plane opposée (12,10) de la plaque.

2. Dispositif suivant la revendication 1, caractérisé en ce que les membranes (2) sont disposées en paires entre des plaques d'appui respectives (1).

3. Dispositif suivant la revendication 1, caractérisé par des canaux ouverts (15,15') prévus sur ladite face plane opposée (12,10) et partant desdits trous traversants (14,14') pour conduire le deuxième fluide au-delà d'une étanchéité (13a,13') prévue sur la première face plane (10,12), jusqu'à un trou (16,16') traversant la plaque pour la distribution de ce deuxième fluide aux deux faces planes opposées (10,12) de la plaque.

4. Dispositif suivant l'une quelconque des revendications précédentes, caractérisé en ce que les orifices traversants (7,8) pour le premier fluide sont prévus sur l'axe central de la plaque, près de ses bords d'extrémité (9,9').

5. Dispositif suivant la revendication 4, caractérisé en ce que les canaux (11,11') partant des bords d'extrémité (9,9') des plaques sont agencés en deux groupes de part et d'autre des orifices traversants (7,8) pour le premier fluide et s'étendent sensiblement jusqu' à ces derniers et de préférence en partie au-delà d'eux.

6. Dispositif suivant la revendication 3, caractérisé en ce que lesdites étanchéités (13,13';13a, 13a') comprennent une partie sensiblement en forme de V ou de U s'étendant transversalement sur la face plane respective et qui entoure l'orifice traversant respectif (7,8) pour le premier fluide.

7. Dispositif suivant l'une quelconque des revendications précédentes, caractérisé en ce que la dite pile est fixée dans une enceinte en forme de boîte (3) comportant des conduits d'entrée (24) prévus pour ledit deuxième fluide entre l'enceinte et les parois d'extrémité de la pile.

8. Dispositif suivant la revendication 7, caractérisé en ce que l'enceinte est composée de deux parties en forme de boîte (3a,3b), comportant chacune une collerette (4a,4b) en saillie le long du bord de l'ouverture, qui sont mutuellement assemblées par moulage dans une bande de retenue (5).

9. Dispositif suivant la revendication 8, caraectérisé en ce que des raccords d'entrée (6) pour ledit deuxième fluide sont moulés solidairement avec la bande de retenue (5).

10. Dispositif suivant la revendication 3, caractérisé en ce que lesdites étanchéités (13,13';13a, 13a') sont agencées de sorte qu'elles coopèrent en paires à des distances différentes des deux bords d'extrémité (9,9') de la plaque.

11. Dispositif suivant la revendication 10, caractérisé en ce que lesdites étanchéités dans les paires respectives consistent en une nervure d'étanchéité (13,13') qui coopère avec une surface d'étanchéité lisse (13a,13a').

**Patentansprüche**

1. Anordnung für die Diffusion und/oder Filtration von Stoffen zwischen zwei Fließmitteln über semipermeable Membranen (2), die in einem Stapel angeordnet und durch Stützplatten (1) getrennt sind, welche eine erste ebene Fläche und eine zweite ebene Fläche (10, 12) haben und Durchgangsöffnungen (7, 8), welche mit einem Einlaß bzw. Auslaß für ein erstes Fließmittel verbunden sind, umfassen, mit Hilfe welcher dieses erste Fließmittel zu der einen Seite der betreffenden Membran geführt wird, während ein zweites Fließmittel zu der anderen Seite der Membran geführt wird, wobei der Stapel von Membranen und Stützplatten eine längliche Form mit einer Durchflußleitung hat, die von den Durchgangsöffnungen (7, 8) gebildet wird und welche gerade durch den Stapel nahe eines jeden ihrer beiden Enden gehend angeordnet ist, gekennzeichnet durch Kanäle (11, 11'), die an Endkanten (9, 9') der Stützplatten münden und offen zu einer ersten ebenen Fläche (10, 12) sind, um das zweite Fließmittel an einer Dichtung (13, 13a'), die auf der gegenüberliegenden ebenen Fläche (12, 10) angeordnet ist, vorbei zu einer Öffnung (14, 14'), die durch die Platte geht, zu führen, wobei das zweite Fließmittel zu bzw. von dem Raum im Inneren der Dichtung (13, 13a') auf der gegenüberliegenden ebenen Fläche (12, 10) der Platte geführt wird.

2. Anordnung nach Anspruch 1, dadurch gekennzeichnet, daß die Membranen (2) in Paaren zwischen jeweiligen Stützplatten (1) angeordnet sind.

3. Anordnung nach Anspruch 1, gekennzeichnet durch auf der gegenüberliegenden ebenen Fläche (12, 10) angeordnete offene Kanäle (15, 15'), die an den Durchgangsöffnungen (14, 14') münden, um das zweite Fließmittel weiter an der Dichtung (13a, 13'), die auf der ersten ebenen Fläche (10, 12) vorgesehen ist, vorbei bis zu einer Öffnung (16, 16'), die durch die zweite Platte geht, zu führen und so dieses zweite Fließmittel auf den beiden einander gegenüberliegenden ebenen Flächen (10, 12) der Platte zu verteilen.

4. Anordnung nach einem der vorausgehenden Ansprüche, dadurch gekennzeichnet, daß die Durchgangsöffnungen (7, 8) für das erste Fließmittel auf der Mittellinie der Platte nahe ihren Endkanten (9, 9') vorgesehen sind.

5. Anordnung nach Anspruch 4, dadurch gekennzeichnet, daß die an den Endkanten (9, 9') der Platten mündenden Kanäle (11, 11') in zwei Gruppen auf jeder Seite der Durchgangsöffnungen (7, 8) für das erste Fließmittel angeordnet sind und sich im wesentlichen bis zu diesen und vorzugsweise teilweise über sie hinaus erstrecken.

6. Anordnung nach Anspruch 3, dadurch gekennzeichnet, daß die Dichtungen (13, 13'; 13a, 13a') einen im wesentlichen V-oder U-förmigen Teil umfassen, der sich quer über die betreffende ebene Fläche erstreckt, welche die betreffende Durchgangsöffnung (7, 8) für das erste Fließmittel umgibt.

7. Anordnung nach einem der vorausgehenden Ansprüche, dadurch gekennzeichnet, daß der Stapel ortsfest in einer kastenartigen Umhüllung (3) mit Einlaßleitung (24), die für das zweite Fließmittel zwischen der Umhüllung und den Endwänden des Stapels vorgesehen sind, angeordnet ist.

8. Anordnung nach Anspruch 7, dadurch gekennzeichnet, daß die Umhüllung aus zwei kastenartigen Teilen (3a, 3b) besteht, von denen jedes mit einem Flansch (4a, 4b) versehen ist, der sich entlang der Öffnungskante erstreckt, wobei die Flansche zusammengehalten werden, indem sie in ein Halteband (15) gegossen sind.

9. Anordnung nach Anspruch 8, gekennzeichnet durch Einlaßnippel (6) für das zweite Fließmittel, die in einem Stück mit dem Halteband (5) gegossen sind.

10. Anordnung nach Anspruch 3, dadurch gekennzeichnet, daß die Dichtungen (13, 13'; 13a, 13a') so angeordnet sind, daß sie in Paaren mit unterschiedlichen Anständen von den beiden Endkanten (9, 9') der Platte aus gerechnet zusammenarbeiten.

11. Anordnung nach Anspruch 10, dadurch gekennzeichnet, daß die Dichtungen in den jeweiligen Paaren aus einer Dichtungswulst (13, 13'), die mit einer ebenen Dichtungsfläche (13a, 13a') zusammenarbeitet, bestehen.

## Fig. 2

## Fig. 4

EP 0 324 922 B1

# Fig. 1

Fig. 3

Fig. 5

EP 0 324 922 B1

Fig. 6